(19) Europäisches Patentamt

European Patent Office

Office européen des brevets

(11) **EP 0 932 744 B1**

(12) **EUROPÄISCHE PATENTSCHRIFT**

(45) Veröffentlichungstag und Bekanntmachung des Hinweises auf die Patenterteilung:
**06.02.2002 Patentblatt 2002/06**

(51) Int Cl.⁷: **E06B 9/24**, F21S 11/00, G02B 5/00

(21) Anmeldenummer: 97944893.3

(22) Anmeldetag: **25.09.1997**

(86) Internationale Anmeldenummer:
**PCT/EP97/05261**

(87) Internationale Veröffentlichungsnummer:
**WO 98/17889 (30.04.1998 Gazette 1998/17)**

(54) **VERFAHREN ZUR HERSTELLUNG VON LICHTLEITPLATTEN**

METHOD FOR MANUFACTURING OPTICAL DIFFUSER PLATES

PROCEDE DE FABRICATION DE PLAQUES POUR DIFFUSEUR OPTIQUE

(84) Benannte Vertragsstaaten:
**AT BE CH DE ES FI FR GB GR IT LI LU NL SE**

(30) Priorität: **21.10.1996 DE 19643118**
**03.07.1997 DE 19728391**

(43) Veröffentlichungstag der Anmeldung:
**04.08.1999 Patentblatt 1999/31**

(73) Patentinhaber: **Röhm GmbH & Co. KG**
**64293 Darmstadt (DE)**

(72) Erfinder:
• **MÜLLER, Michael**
**D-64625 Bensheim (DE)**
• **BENZ, Volker**
**D-64739 Höchst (DE)**
• **MEIER-KAISER, Michael**
**D-64665 Alsbach-Hähnlein (DE)**
• **LORENZ, Hans**
**D-64291 Darmstadt (DE)**
• **MENDE, Volker**
**D-64297 Darmstadt (DE)**
• **HÄRING, Helmut**
**D-64354 Reinheim (DE)**
• **SCHÖNIG, Berthold**
**D-64380 Rossdorf (DE)**

(56) Entgegenhaltungen:
**US-A- 4 989 952**

• **PATENT ABSTRACTS OF JAPAN vol. 013, no. 161 (M-815), 18.April 1989 & JP 63 319140 A (SHIN ETSU POLYMER CO LTD), 27.Dezember 1988,**

**Beschreibung**

Gebiet der Erfindung

Die Erfindung betrifft Lichtleitplatten aus transparentem Kunststoff, die zur besseren Ausleuchtung von Räumen mittels Tageslicht dienen.

U.S. 4,989,952 beschreibt eine Lichtleitplatte, die aus einem transparenten Material mit einer Anzahl von parallelen Einschnitten besteht. Der Unterschied zur erfindungsgemäßen Platte besteht darin, dass das Material, welches aus der Platte des Standes der Technik mit Hilfe eines Laserstrahls entfernt wird, dasselbe Material ist, aus dem die Platte besteht.

Aufgabe und Lösung

Zu den ganz im Vordergrund stehenden Aufgaben der Technik gehört die Energieeinsparung bzw. die Schonung der vorhandenen Ressourcen. Die diesbezüglichen Untersuchungen haben sich neben der Einsparung fossiler Energieträger auch der Verminderung des Verbrauchs an elektrischer Energie zugesandt.

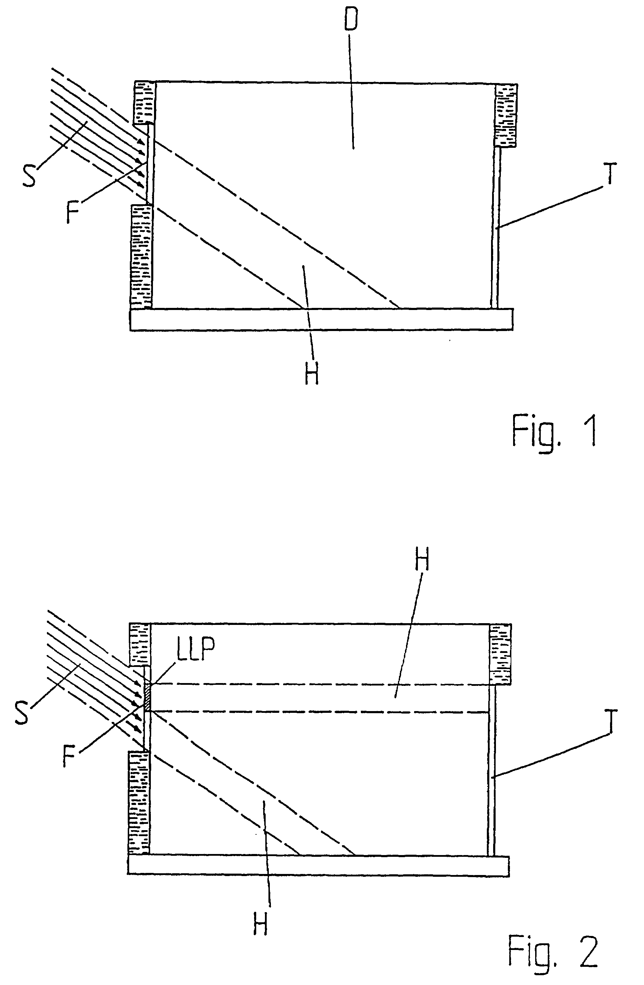

Ein Problem bei der Ausleuchtung von relativ tiefen Räumen mit Tageslicht besteht darin, dass besonders bei steil stehender Sonne der hintere, fensterabgewandte Bereich der Räume nicht adäquat ausgeleuchtet ist [vgl. Fig. 1]. Dieser Umstand führt dazu, dass Teile des Raums auch tagsüber schon mit Kunstlicht ausgeleuchtet werden müssen, was sowohl energetisch als auch ergonomisch von Nachteil ist. Fig. 1 stellt einen typischen Innenraum dar. Für Fig. 1 gelten die folgenden Bezugszeichen:

    S = Einfallendes Sonnenlicht
    F = Fenster
    T = Tür
    H = Zone relativer Helligkeit
    D = Zone relativer Dunkelheit

Die vorliegende Erfindung hat sich nun zur Aufgabe gesetzt, hier Abhilfe zu schaffen. Zur Lösung des Problems werden sogenannten Lichtleitelemente eingesetzt die nach dem Verfahren gemäß dem Gegenstand des unabhängigen Anspruchs hergestellt sind. Diese Lichtleitelemente sammeln - über einen Teil der Fensterfläche - das Tageslicht und lenken es in die Tiefe des Raums oder gegen die Decke (Fig. 2). Die Lichtleitelemente, bewirken somit eine Umlenkung des von außen steil einfallenden Tageslichts in das Innere des Raums.

Fig. 2 stellt den in Fig. 1 abgebildeten Raum nunmehr ausgestattet mit dem erfindungsgemäßen Lichtleitelement in einem Teil der Fensterfläche dar. Das Bezugszeichen LLP steht für die Lichtleitplatte. Die übrigen Bezugszeichen entsprechen denen in Fig. 1.

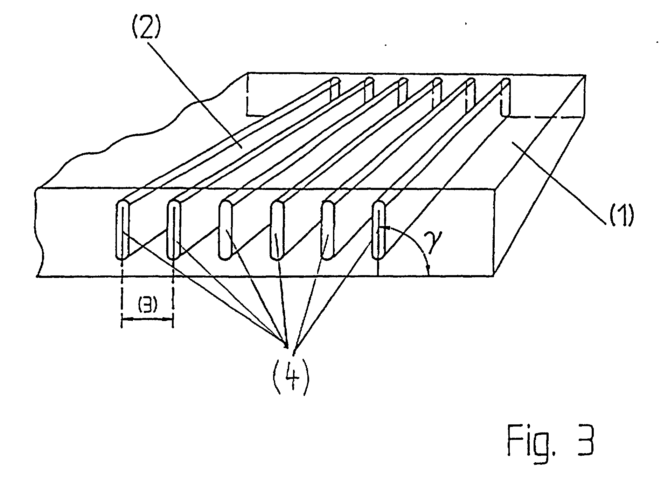

Um die gewünschte Umlenkung zu erzielen, wird eine Lichtleitplatte LLP mit folgendem Aufbau vorgeschlagen (Fig. 3):

In eine - in der Regel ebene - Platte aus transparentem Kunststoff A mit dem Brechungsindex $n_A$ werden dünne Bänder, aus einem Kunststoff B mit dem Brechungsindex $n_B$ eingefügt, vorzugsweise einextrudiert, mit der Maßgabe, dass Kunststoff A nicht mit Kunststoff B verträglich ist und Kunststoff A sich von Kunststoff B trennt. Diese Trennung wird durch das Vorhandensein einer Streckgrenze beim Kunststoff B begünstigt.

Als Kunststoff B kommen beispielsweise folgende Kunststoffe in Frage:

    Fluorpolymere, wie beispielsweise thermoplastisch Fluorpolymere, wie beispielsweise das Produkt THV 500 G der Firma 3M,

    Polypropylen-Typen, wie beispielsweise die Lupolen-Typen der BASF AG,

    Polyethylen-Typen, wie beispielsweise die Polyethylen-Typen, wie beispielsweise die Vestamid-Typen der Hüls AG.

Durch beide, an sich unterschiedliche Merkmale, kann der Lichtleiteffekt erzielt werden. Die Trennfläche der Materialien bzw. der Materialübergang ist dabei dementsprechend entweder nur infolge des Unterschieds der Brechungsindices bemerkbar oder er ist - bei Bildung des Trennspalts - als spiegelnde Fläche sehr deutlich erkennbar.

Die einextrudierten Bänder aus dem Kunststoff B lösen sich während oder nach dem Erkalten von der Platte aus dem Kunststoff A und können aus dieser Platte leicht herausgezogen werden. Dies kann manuell oder durch eine Wickelvorrichtung erfolgen.

Die aus Kunststoff B bestehenden Bänder können sowohl senkrecht zur Plattenoberflche als auch in einem Winkel $\gamma < 90°$ zur Plattenoberfläche angeordnet sein.

Tritt ein Licht auf eine Lichtleitplatte LLP der beschriebenen Art, so gelten an der Grenzfläche zwischen den Kunststoffen A und dem Luftspalt die Gesetzt der Totalreflexion. Der Grenzwinkel der Totalreflexion $\alpha_G$ hängt nur von den Brechungsindices der beiden Kunststoffe ab.

$$\alpha_G = \arcsin n_A/n_B$$

Für den Fall, dass sich der Kunststoff B vom Kunststoff A gelöst hat und damit ein Spalt zwischen den Bändern und der sie umgebenden Matrix vorliegt gilt:

$$\alpha_G = \arcsin n_A/1$$

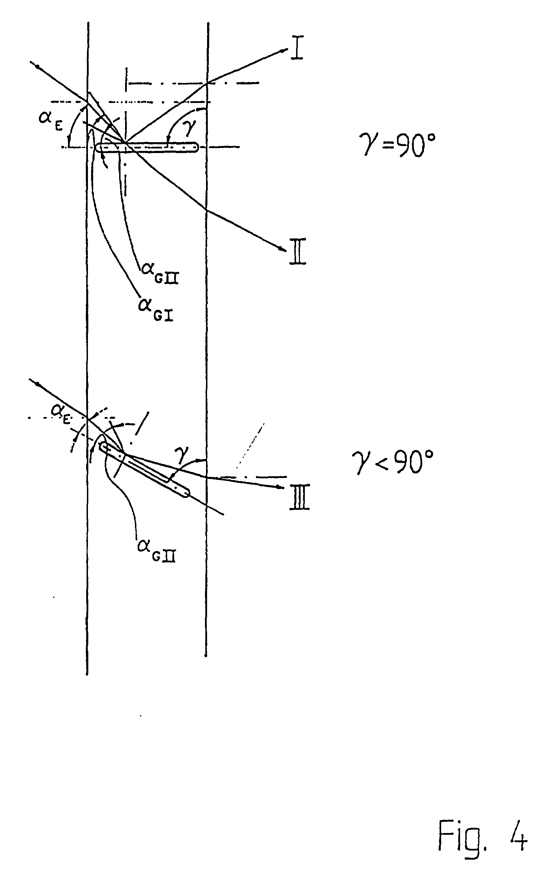

Ist der Winkel $\alpha_E$, mit dem der Lichtstrahl auf die Grenzfläche auftritt kleiner als der Grenzwinkel $\alpha_G$, so erfolgt Totalreflexion (Fall I in Fig. 4). Der steil einfallende Lichtstrahl wird auf eine flachere Bahn oder nach oben abgelenkt. Durch Ersatz der in der WO-A-97/19372 (nach veröffentlicht) beschriebenen Kunststoffbänder aus dem Kunststoff B mit einem Kunststoff A unterschiedlichen Brechungsindex durch Luft erreicht man die maximal mögliche Differenz im Brechungsindex.

Ist der Winkel $\alpha_E$ größer als $\alpha_G$ (Fall II in Fig. 4), so tritt der einfallende Lichtstrahl durch die Grenzfläche hindurch. Da der bevorzugte Herstellungsmodus der Lichtleitplatten LLP die Koextrusion der Platte samt eingefügten dünnen Bändern ist, bieten sich in erster Linie koextrusionsfähige, transparente Thermoplasten an, die mit dem Kunststoff A der Platte unverträglich sind. Je größer der Brechungsindexunterschied ist, desto größer ist auch der Grenzwinkel $\alpha_G$ und damit die Wirksamkeit des Systems. Eine ausreichende Wirksamkeit des Systems auch bei kleinen Grenzwinkeln $\alpha_G$ kann durch Schrägstellen der Bänder aus Kunststoff ($\gamma$ < 90°) erreicht werden. Durch die Schrägstellung der Bänder wird der Einfallswinkel auf die Grenzfläche $\alpha_E$ verkleinert (Fall II in Fig. 4).

Als derartige Kunststoffe A können beispielsweise Polymethylmethacrylat (PMMA und Copolymerisate) oder Polycarbonat (PC) eingesetzt werden, als Kunststoff B kommen die vorstehend erwähnten Polymere infrage. Es hat sich bei Versuchen zur Herstellung von Lichtleiterplatten, wie sie obenstehend beschrieben wurden, gezeigt, dass noch ein weiteres Merkmal zu unerwarteten Lichtleitereffekten führt. Es wurde gefunden, dass bei Unverträglichkeit des Kunststoffes B mit dem Kunststoff A, wenn also das dünne Band aus dem Kunststoff B keine Haftung mit der Matrix, dem Kunststoff A hat und von diesem durch einen dünnen Spalt getrennt ist, die Lichtleitungswirkung erhöht wird. Die Ablösung des Kunststoffbandes aus dem Kunststoff B von dem Matrixpolymeren A ist optisch leicht zu erkennen:

Das Kunststoffband scheint eine spiegelnde Oberfläche zu besitzen. Dies ist ein Zeichen, dass der dünne Spalt entlang der Oberfläche des Bandes eine ausgeprägte Totalreflexion hervorgerufen hat. Die Brechungsindizes von Luft und dem Matrix-Kunststoff A unterscheiden sich noch viel stärker, als die von Kunststoff B und dem Matrix-Kunststoff A, entsprechend der oben angegebenen Formel, was die hohe Totalreflexion erklärt.

Es konnte bislang noch nicht festgestellt werden, ob der Spalt ursprünglich mit Luft gefüllt ist, oder mehr oder weniger luftleer ist. Anzunehmen ist, dass der Spalt sich im Laufe der Zeit durch Nachdiffusion von Luft durch den Kunststoff A hindurch mit Luft füllt, nachdem sich der Kunststoff B vom Kunststoff A gelöst hat.

Die Ablösung der beiden Kunststoffe A und B voneinander wird durch unterschiedliche thermische Ausdehnungskoeffizienten begünstigt. Sie erfolgt beim Abkühlen der Extrusionsmasse. Das Band sollte dabei bevorzugt stärker schwinden als die Matrix, d.h. Kunststoff B sollte den höheren thermischen Ausdehnungskoeffizienten besitzen als Kunststoff A. Bereits geringe Unterschiede im thermischen Ausdehnungskoeffizienten von ≥ 0,001 % führen zum erfindungsgemäßen Effekt.

Bei Bildung des Trennspaltes zwischen den Kunststoffen A und B ist es unerheblich, ob die beiden Kunststoffe sich im Brechungsindex noch im anfangs beschriebenen Sinne unterscheiden. Der Brechungsindex von Kunststoff A kann bevorzugt höher, aber auch gleich oder niedriger sein als der von Kunststoff B. Die durch Bildung des Trennpunktes hervorgerufene Totalreflexion ist auf jeden Fall stark genug, um einen eindrucksvollen Lichtleiteffekt zu bewirken. Die Breite des Trennspalts muss größer als 1 µm sein.

Die Dicke der Lichtleitplatten LLP liegt im allgemeinen im Bereich 2 bis 20 mm. Die eingefügten, vorzugsweise einextrudierten Bänder aus dem Kunststoff B besitzen in der Regel eine Dicke von 0,05 - 0,5 mm und eine Breite von 50 bis 95 % bezogen auf die Dicke der aus Kunststoff A bestehenden Platte. Im allgemeinen sind die Bänder aus dem Kunststoff B regelmäßig in gegenseitigen Abständen von 2 bis 40 mm in den Kunststoffplatten A angeordnet.

Die übrigen Abmessungen der Lichtleitplatten LLP werden zweckmäßig den Verglasungseinheiten insbesondere den Fenster- oder Türformaten angepasst. Eine Beschränkung der Abmessungen bedingt durch die angewendete Extrusionstechnologie ist in der Regel nicht zu erwarten.

Die Herstellungstechnologie mittels Extrusion in einer Extrusionsanlage mittels Mehrmaterialdüse entspricht dem Stand der Technik (DE-A 4 326 232).

Die erfindungsgemäßen Lichtleitplatten LLP werden anhand der Fig. 3 erläutert. Dabei bedeuten die Bezugszeichen

    (1) = Lichtleitplatte LLP aus Kunststoff A
    (2) = eingefügte dünne Bänder aus Kunststoff B
    (3) = Abstand zwischen den durch das Herausziehen der Kunststoffe entstandendene Hohlräume
    (4) = Hohlräume

Zur Halterung der erfindungsgemäßen Lichtleitplatten kann man sich an sich bekannter Halterungsprofile für Platten aus organ. Gläsern bedienen.

Vorteilhafte Wirkungen

Die erfindungsgemäßen Lichtleitplatten können mit Erfolg zur besseren Ausleuchtung von Räumen, u. a. Werkstätten, Sälen, Kellern, Gewölben, Schächten, gegebenenfalls auch Fahrzeugen wie Schiffen u. ä. eingesetzt werden. Ihre Anwendung kann nicht nur zur Energieersparnis sondern auch zur besseren ergonometrischen Gestaltung von Arbeitsräumen beitragen.

**Patentansprüche**

1. Verfahren zur Herstellung von Lichtleitplatten aus einem transparenten Kunststoff A durch Koextrusion eines transparenten Kunststoffs A mit einem Brechungsindex $n_A$ mit einem Kunststoff B mit einem Brechungsindex $n_B$, wobei die Kunststoffe A und B miteinander unverträglich sind und der Kunststoff B in Form mehrerer dünner Bänder vorliegt,
   **dadurch gekennzeichnet, dass**
   die dünnen Bänder aus Kunststoff B nach der Koextrusion aus der Matrix des Kunststoffs A entfernt werden.

2. Verfahren nach Anspruch 1,
   **dadurch gekennzeichnet, dass**
   als Kunststoff A Polymethacrylat oder Polycarbonat ist.

3. Verfahren nach Anspruch 1,
   **dadurch gekennzeichnet, dass**
   als Kunststoff B ein mit Polycarbonat oder mit Polymethacrylat unverträglicher Kunststoff verwendet wir.

4. Verfahren nach Anspruch 1,
   **dadurch gekennzeichnet, dass**
   als Kunststoff B ein thermoplastische Fluorpolymeres, ein Polypropylen, ein Polyethylen oder ein Polyamid verwendet wird.

5. Verfahren nach einem der Ansprüche 1 bis 4,
   **dadurch gekennzeichnet, dass**
   die bandförmigen Hohlräumen, die nach der Entfernung der dünnen Bänder aus Kunststoff B entstehen, eine Dicke von 0,05 bis 0,5 mm besitzen.

6. Verfahren nach den Anspruch 1 bis 5,
   **dadurch gekennzeichnet, dass** die Lichtleitplatten Dicken im Bereich 2 bis 30 mm Besitzen.

7. Verfahren gemäß Anspruch 1,
   **dadurch gekennzeichnet, dass**
   die aus dem Kunststoff B bestehenden Bänder senkrecht zur Plattenoberfläche angeordnet sind.

8. Verfahren gemäß Anspruch 1,
   **dadurch gekennzeichnet, dass**
   die aus dem Kunststoff B bestehenden Bänder unter einem Winkel $\gamma < 90°$ zur Plattenoberfläche angeordnet sind.

9. Verfahren gemäß Anspruch 1,
   **dadurch gekennzeichnet, dass**
   die Kunststoffe A und B aus thermoplastischem Material bestehen.

10. Verglasungseinheiten enthaltend Lichtleitplatten, die nach dem Verfahren nach einem der Ansprüchen 1 bis 9 hergestellt sind.

**Claims**

1. Process for producing optical diffuser plates from a transparent plastic A by coextrusion of a transparent plastic A having a refractive index $n_A$ with a plastic B having a refractive index $n_B$, wherein the plastics A and B are incompatible with one another and the plastic B is present in the form of a plurality of thin strips, **characterised in that** the thin strips of plastic B are removed from the matrix of plastic A after the coextrusion.

2. Process according to claim 1, **characterised in that** plastic A is polymethacrylate or polycarbonate.

3. Process according to claim 1, **characterised in that** plastic B is a plastic which is incompatible with polycarbonate or with polymethacrylate.

4. Process according to claim 1, **characterised in that** plastic B is a thermoplastic fluorine polymer, a polypropylene, a polyethylene or a polyamide.

5. Process according to one of claims 1 to 4, **characterised in that** the strip-shaped cavities which are formed after the removal of the thin strips of plastic B are 0.05 to 0.5 mm thick.

6. Process according to one of claims 1 to 5, **characterised in that** the optical diffuser plates have a thickness in the range of 2 to 30 mm.

7. Process according to claim 1, **characterised in that** the strips consisting of the plastic B are arranged perpendicular to the surface of the plate.

8. Process according to claim 1, **characterised in that** the strips consisting of the plastic B are arranged at an angle $\gamma < 90°$ to the surface of the plate.

9. Process according to claim 1, **characterised in that** the plastics A and B consist of thermoplastic material.

10. Glazing units containing optical diffuser plates produced using the process according to one of claims 1 to 9.

## Revendications

1. Procédé de production de plaques de diffusion optique faites d'une matière plastique transparente A, par coextrusion d'une matière plastique transparente A ayant un indice de réflexion $n_A$ avec une matière plastique B ayant un indice de réflexion $n_B$, où les matières plastiques A et B sont incompatibles entre elles et la matière plastique B se présente sous forme de plusieurs bandes minces,
**caractérisé en ce qu'**
on retire les bandes minces de matière plastique B, après la coextrusion, de la matrice de matière plastique A.

2. Procédé selon la revendication 1,
**caractérisé en ce que**
la matière plastique A est le polyméthacrylate ou le polycarbonate.

3. Procédé selon la revendication 1,
**caractérisé en ce qu'**
on utilise comme matière plastique B une matière plastique incompatible avec le polycarbonate ou avec le polyméthacrylate.

4. Procédé selon la revendication 1,
**caractérisé en ce qu'**
on utilise comme matière plastique B un polymère fluoré thermoplastique, un polypropylène, un polyéthylène ou un polyamide.

5. Procédé selon l'une des revendications 1 à 4,
**caractérisé en ce que**
les vides en forme de bande qui apparaissent après retrait des minces bandes de matière plastique B ont une épaisseur de 0,05 à 0,5 mm.

6. Procédé selon l'une des revendications 1 à 5,
**caractérisé en ce que**
les plaques de diffusion optique ont des épaisseurs allant de 2 à 30 mm.

7. Procédé selon la revendication 1,
**caractérisé en ce que**
les bandes constituées de matière plastique B sont disposées perpendiculairement à la surface des plaques.

8. Procédé selon la revendication 1,
**caractérisé en ce que**
les bandes constituées de matière plastique B sont disposées sous un angle $\gamma < 90°$ par rapport à la surface de la plaque.

9. Procédé selon la revendication 1,
**caractérisé en ce que**
les matières plastiques A et B se composent d'une matière thermoplastique.

10. Unités de vitrage contenant des plaques de diffusion optique qui sont produites selon le procédé d'une des revendications 1 à 9.

Fig. 1

Fig. 2

Fig. 3

$\gamma = 90°$

$\gamma < 90°$

Fig. 4